# EUROPEAN PATENT SPECIFICATION

(11) **EP 1 550 986 B1**
(45) Date of publication and mention of the grant of the patent: **23.04.2008**
(21) Application number: 04258178.5
(22) Date of filing: 30.12.2004
(51) Int. Cl.: G07F 11/00, G07F 17/00

(54) **Vending machine**
Verkaufsautomaten
Distributeur automatique

(30) Priority: 05.01.2004 JP 2004000326
(43) Date of publication of application: 06.07.2005
(73) Proprietor: Sanden Corporation, Isesaki-shi, Gunma 372-8502 (JP)
(72) Inventor: Tokizawa, Kuniyuki, c/o Sanden Corporation, Isesaki-shi, Gunma 372-8502 (JP)
(74) Representative: Haley, Stephen

(56) References cited:
- WO-A-02/32077
- WO-A-02/073548
- FR-A- 2 802 672
- US-A- 5 844 808
- DROMS BUCKNELL UNIVERSITY R: "Dynamic Host Configuration Protocol; rfc2131.txt" 1 March 1997 (1997-03-01), XP015007915

## Description

The present invention relates to a vending machine capable of communicating with a host computer, and more specifically to the technology of a setting method required for the communications with a host computer.

A vending machine of this type is known that is disclosed in Japanese Patent Publication No. 10-63926. The vending machine has a built-in communication device such as a modem for connection to a host computer. The type of communication device is selected depending on the style of connection to a host computer. A vending machine mounted outdoor frequently uses a communication device for wireless connection to a host computer.

A communication device for wireless communication can be a terminal in accordance with the PDC (Personal Digital Cellular), PHS (Personal Handyphone System), GSM (Global System for Mobile Communications), or CDMA (Code Division Multiple Access) standards. The terminals of the communication devices of these types are assigned in advance telephone numbers by a carrier because these communication devices use a mobile communication network. The host computer can communicate with a vending machine by a packet communication system or a circuit switching system. When a packet communication system is used, a carrier assigns a predetermined address to each communication device. In the control device of a vending machine, a setting for dial-up connection is made in advance according to various information including a telephone number of a predetermined access point, an address of a communication device, etc., thereby allowing the vending machine to communicate with the host computer.

As described above, it is necessary to set in advance an address of a communication device, etc to make dial-up connection between a vending machine and a host computer over a mobile communication network. However, since a different address is assigned to each communication device, the setting operation is to be performed on each vending machine, and has been a very bothersome operation. Furthermore, after mounting a vending machine in the market, it is also necessary to make an additional bothersome setting operation when an address is updated by an exchange of the communications device.

WO02073548A discloses a cash vending machine including a communication device enabling it to communicate with a host. Assignment of a unique address can be carried out manually, or in the case of a TCP/IP network, by an auto-assignment technique such as DHCP.

The present invention aims at providing a vending machine capable of easily making settings for communications.

The invention consists in a vending machine capable of communicating with a host computer by dial-up connection to a predetermined access point, including:
a communication device for establishing a dial-up connection, the communication device assigned a predetermined telephone number;
a storage device, and
a control device for configuring the dial-up connection,
characterised in that the storage device stores a list describing a correspondence between a telephone number and an address of the communication device; and
the control device issues to the communication device an inquiry about the telephone number assigned to the communication device, retrieves from the list an address corresponding to the telephone number received from the communication device, and configures the dial-up connection using the retrieved address as an assigned address.

Therefore it is not necessary to perform different setting operations for each communication device. Therefore, the initial setting at the shipment from the factory and a change in setting after the shipment can be easily performed.

According to the present invention, if a list describing the correspondence between the telephone numbers and the addresses of a plurality of communication devices is stored in a storage device in advance, it is not necessary to set different settings for a plurality of vending machines. Therefore, the initial settings at the shipment from a factory and a setting change after the shipment can be easily performed.

There can be a case in which a list stored in the storage device is to be updated after the shipment of the vending machine. Therefore, preferably an interface allowing a removable mobile storage medium can be attached to the vending machine, and the storage device can store the list from a mobile storage medium connected to the interface. Furthermore, the list can be received from the host computer, and the list can be stored in the storage device.

Other purposes, configurations, and effects of the present invention are clearly described below in detail.
FIG. 1 shows a network of the vending machine management system;
FIG. 2 is a block diagram of the control system of the vending machine;
FIG. 3 shows an example of a correspondence list;
FIG. 4 shows an example of a correspondence list; and
FIG. 5 is a sequential chart for explanation of the flow of setting dial-up connection.

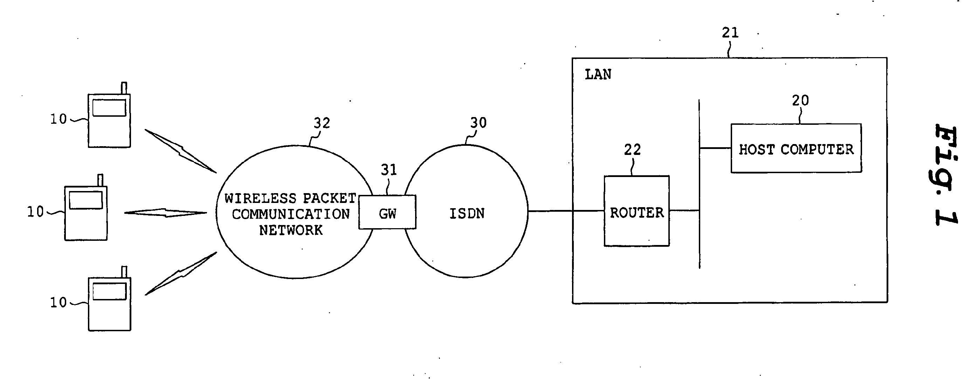

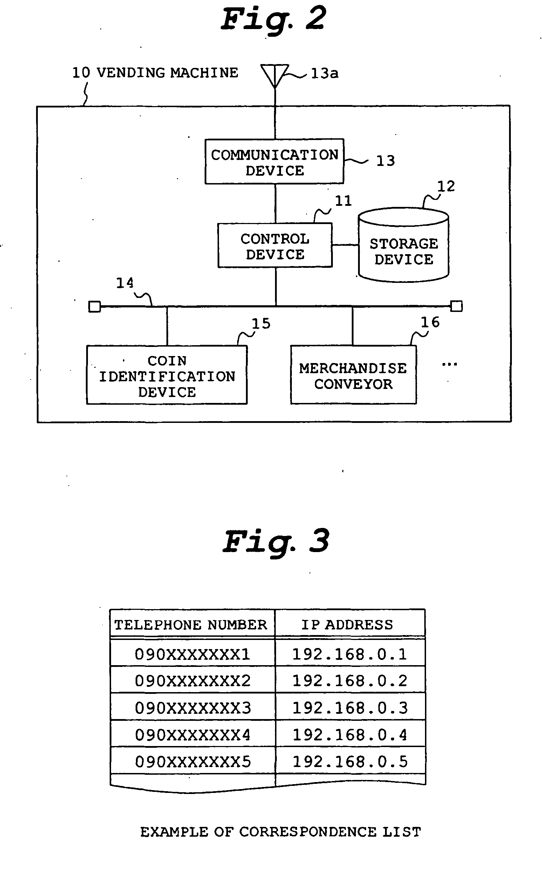

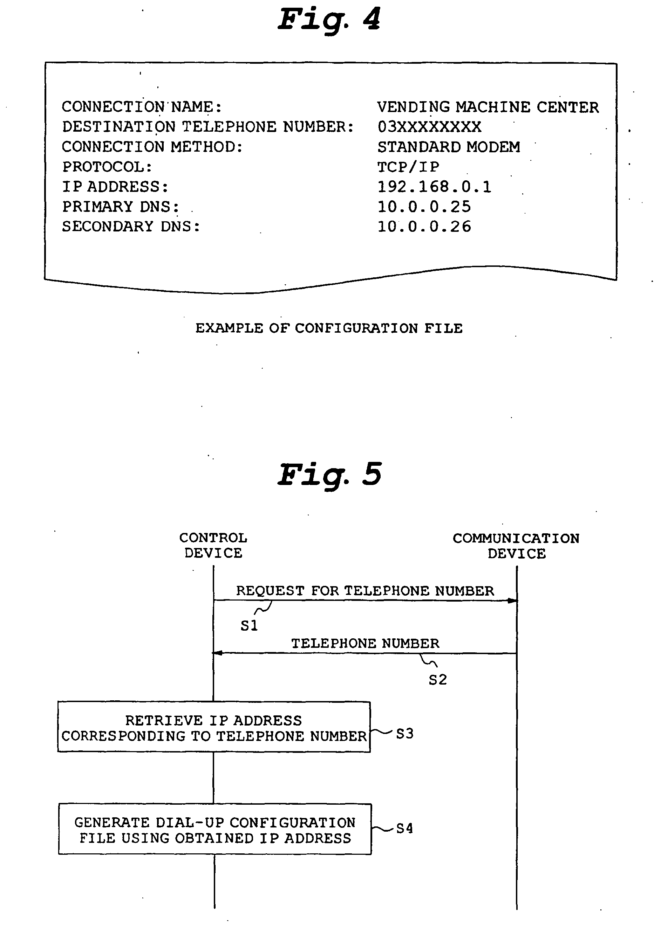

A vending machine according to an embodiment of the present invention is explained below by referring to FIGS. 1 to 4. FIG. 1 shows a network of the vending machine management system. FIG. 2 is a block diagram of the control system of the vending machine. FIG. 3 shows an example of a correspondence list. FIG. 4 shows an example of a configuration file. FIG. 5 is a sequence chart for explanation of the flow of setting dial-up connection.

In the vending machine management system according to an embodiment of the present invention, a host computer 20 centrally manages a plurality of vending machines 10 over a network as shown in FIG. 1. The host computer 20 is accommodated in a LAN (Local Area Network) 21 mounted for an administrator. The LAN 21 is connected to an ISDN (Integrated Services Digital Network) 30 through a router 22 which is a relay device. The ISDN 30 is connected to a wireless packet communication network 32 through a gateway 31 which is a relay device. Each vending machine 10 is provided with a communication device (not shown in FIG. 1) accommodated in the wireless packet communication network 32. With the above-mentioned network configuration, each vending machine 10 can be communicated with the host computer 20.

According to the present embodiment, the wireless packet communication network 32 is configured in a mobile communication network according to the PDC standards. A communication device connected to the wireless packet communication network 32 is assigned a telephone number by a carrier as an identification number for unique identification in the mobile communication network. In the present embodiment, a TCP/IP (Transmission Control Protocol/Internet Protocol) protocol suite is used as a protocol in the wireless packet communication network 32. A specific IP address is assigned by a carrier to a communication device connected to the wireless packet communication network 32. The IP address of a communication device is fixed because there is a case in which connection can be established from the host computer 20 to the vending machine 10.

The vending machine 10 comprises a control device 11, a storage device 12, and a communication device 13 as shown in FIG. 2. The control device 11 is connected to controlled equipment such as a coin identification device 15, a merchandise conveyor 16, etc. through a bus 14. In FIG. 2, only the above-mentioned two devices are illustrated as controlled equipment for simple explanation.

The control device 11 performs a merchandise sales operation to a consumer and a sales management operation, etc. for an administrator by controlling controlled equipment such as the coin identification device 15, the merchandise conveyor 16, etc. Since the controlling operation is the same as in the conventional technology, the explanation is omitted here. The storage device 12 functions as a storage area of the control device 11. The storage device 12 stores various data such as a correspondence list between a telephone number of a communication device and an IP address, a configuration file of dial-up connection, etc. According to the present embodiment, a personal computer is used as the control device 11, and a hard disk of the personal computer is used as the storage device 12.

The communication device 13 is a terminal for possible connection to the wireless packet communication network 32, and supports the TCP/IP and PPP (point to point protocol) as an available protocol. The communication device 13 supports an AT command as a command system. Especially, as an extended AT command, the communication device 13 supports a command to return a telephone number assigned to the communication device 13 at a request from the control device 11. The communication device 13 is, as described above, assigned a telephone number and an IP address by the carrier. An antenna 13a is connected to the communication device 13.

FIG. 3 shows an example of a correspondence list stored in the storage device 12. The correspondence list describes a plurality of correspondences between a telephone number and an IP address assigned to the communication device 13. The communication devices 13 to be listed include not only the above-mentioned communication device 13 itself but also all or a part of the communication devices 13 of the vending machines 10 that are managed by the host computer 20. As necessary, information about a standby communication device 13 not yet implemented to the vending machine 10 can be included. That is, the list includes the information about the communication device 13 to be managed and appropriately selected as required by the administrator of the vending machine 10.

FIG. 4 shows an example of a configuration file stored in the storage device 12. The configuration file is referred to when the control device 11 establishes dial-up connection for a predetermined access point using the communication device 13. That is, the control device 11 establishes connection by issuing a call to an access point based on the configuration file, and performs a process of setting an IP address. In the present embodiment, a PPP is used as a protocol of dial-up connection.

A set item included in the configuration file can be, as shown in FIG. 4, a "connection name" for unique identification of connection setting, a "destination telephone number" which is the telephone number of an access point, a "connecting method" for determining which communication device is to be used, an available "protocol", an assigned "IP address", an IP address of a "primary DNS (Domain Name System)" server, an IP address of a "secondary DNS" server, etc. The items other than the assigned IP address are common among a plurality of vending machines 10 to be managed. On the other hand, since the assigned IP address item is uniquely assigned to the communication device 13, it depends on each vending machine 10. The present invention aims at easily setting the assigned IP address.

An access point is the router 22 in the example of the configuration shown in FIG. 1, but the configuration can be designed such that communication equipment such as a TA (Terminal Adapter), etc. directly connected to the host computer 20 can be used.

Next, the operation of the vending machine according to the present embodiment is explained by referring to the sequence chart shown in FIG. 5. In FIG. 5, only the operations performed when the control device 11 sets dial-up connection are explained.

The control device 11 first issues to the communication device 13 an inquiry about the telephone number of the communication device 13 (step S1) . In the present embodiment, an AT command is used in the inquiry. To be more practical, an "AT & P" command is issued to the communication device 13. The communication device 13 returns its own telephone number to the control device 11 in response to the inquiry (step S2). The telephone number is returned to the control device 11 in the format "ID=090XXXXXXX1".

The control device 11 retrieves an IP address corresponding to the communication device 13 from the corresponding list in the storage device 12 by using the obtained telephone number (step S3). Using the obtained IP address, a configuration file of the storage device 12 is generated (step S4). Practically, the obtained IP address is set in the item of "IP address" shown in FIG. 4. In the above-mentioned operation, since the setting operation for dial-up connection of the control device 11 is completed, the control device 11 can establish dial-up connection to a predetermined access point. Therefore, the control device 11 can communicate with the host computer 20 as necessary.

As described above, according to the vending machine 10 of the present embodiment, appropriate dial-up connection can be set only by allowing a plurality of vending machines 10 to store a common correspondence list. That is, since it is not necessary to make a different setting for each vending machine, the bothersome operation can be reduced.

It is considered that the correspondence list between the telephone number and the IP address is to be changed after the shipment of the vending machine. For example, it is necessary when a new communication device is purchased as a standby device, when an IP address assigned by a carrier is to be changed, etc.

The method for easily updating the correspondence list can be providing for the control device 11 an interface to which a removable mobile storage medium can be attached. The mobile storage medium can be a flexible disk, a non-volatile memory card, etc. Then, a new correspondence list is recorded on the mobile storage medium. When the mobile storage medium is attached to the interface, the control device 11 overwrites the correspondence list stored in the record medium on the storage device 12.

Another method for easily updating a correspondence list is managing a new correspondence list in the host computer 20, reading the correspondence list when the control device 11 accesses the host computer 20, and overwriting the storage device 12. In this case, the update date of the correspondence list managed by the host computer 20 is compared with the update date of the correspondence list stored in the storage device 12. If the date managed by the host computer 20 is newer, the overwriting copy is performed. The update date can be periodically conformed, each time connection to the host computer 20 is performed, only when an instruction of the operator of the vending machine 10 is issued, or at an instruction from the host computer 20.

As described above, the present invention is described by referring to an embodiment of the present invention. However, the present invention is not limited to this application. That is, in the above-mentioned configuration, the control device 11 and the storage device 12 is realized by a personal computer, but another device can also be used in realizing it.

The protocol and the command system are only examples in the present embodiment, and other protocol, etc. can be used in embodying the present invention.

In the above-mentioned embodiment, the vending machine 10 is connected to the host computer 20 over the wireless packet communication network 32, but the present invention can be embodied by another network configuration. That is, the present invention can be embodied with a network configuration in which a communication device having the function of returning all or a part of necessary information for dial-up connection in response to an inquiry is used. Therefore, the packet communication system or the circuit switching system can be accepted, and any standards of wireless communication (PDC, PHS, GSM, CDMA, etc.) are accepted. Furthermore, either wireless communication or cable communication can be used.

In the above-mentioned embodiment, the router 22 mounted in the LAN 21 of the administrator is used as an access point to establish direct dial-up connection to the LAN 21. However, access from another path can be gained. For example, as described above, the communication equipment such as a TA directly connected to the host computer 20 can be an access point. Additionally, for example, communication equipment supplied by an Internet connection provider can be an access point. In this case, the communication path is used with the Internet.

## Claims

1. A vending machine capable of communicating with a host computer (20) by dial-up connection to a predetermined access point, including:
a communication device (13) for establishing a dial-up connection, the communication device being assigned a predetermined telephone number;
a storage device (12), and
a control device (11) for configuring the dial-up connection,
**characterised in that** the storage device (12) stores a list describing a correspondence between a telephone number and an address of the communication device (13); and
the control device (11) issues to the communication device (13) an inquiry about the telephone number assigned to the communication device (13), retrieves from the list an address corresponding to the telephone number received from the communication device (13), and configures the dial-up connection using the retrieved address as an assigned address.

2. The vending machine according to claim 1, wherein an AT command is used in obtaining the telephone number from the communication device (13).

3. The vending machine according to claim 1, wherein the control device (11) configures the dial-up connection by generating a configuration file, and establishes the dial-up connection using the configuration file.

4. The vending machine according to claim 1, further comprising an interface to which a removable mobile storage medium can be attached, the mobile storage medium containing a new list describing correspondence between a telephone number and an address of the communication device.

5. The vending machine according to claim 1, wherein the control device (11) receives the list describing the correspondence between a telephone number and an address of the communication device from the host computer (20), and stores the list in the storage device (12).

6. The vending machine according to claim 1, wherein:
the storage device (12) stores a configuration file containing items including the assigned address; and
the control device (11) sets the retrieved address as the assigned address item of the configuration file, and establishes dial-up connection using the configuration file.

## Patentansprüche

1. Verkaufsautomat, der in der Lage ist, mit einem Hostrechner (20) durch eine Wählverbindung zu einem vorgegebenen Zugangspunkt zu kommunizieren, beinhaltend:
eine Kommunikationsvorrichtung (13) zum Aufbau einer Wählverbindung, wobei der Kommunikationsvorrichtung eine vorgegebene Telefonnummer zugewiesen ist;
eine Speichervorrichtung (12) und
eine Steuervorrichtung (11) zum Konfigurieren der Wählverbindung,
**dadurch gekennzeichnet, dass**
die Speichervorrichtung (12) eine Liste, die eine Zuordnung zwischen einer Telefonnummer und einer Adresse der Kommunikationsvorrichtung (13) beschreibt, abspeichert; und dass
die Steuervorrichtung (11) an die Kommunikationsvorrichtung (13) eine Anfrage über die der Kommunikationsvorrichtung (13) zugewiesene Telefonnummer ausgibt, und von der Liste eine Adresse empfängt, die der Telefonnummer, die von der Kommunikationsvorrichtung (13) empfangen wird, entspricht und die Wählverbindung unter Verwendung der empfangenen Adresse als eine zugewiesene Adresse konfiguriert.

2. Verkaufsautomat nach Anspruch 1, wobei ein AT-Befehl verwendet wird, um die Telefonnummer von der Kommunikationsvorrichtung (13) zu erhalten.

3. Verkaufsautomat nach Anspruch 1, wobei die Steuervorrichtung (11) die Wählverbindung durch Erzeugen einer Konfigurationsdatei konfiguriert und die Wählverbindung unter Verwendung der Konfigurationsdatei aufbaut.

4. Verkaufsautomat nach Anspruch 1, ferner aufweisend eine Schnittstelle, an die ein entfernbares mobiles Speichermedium angebracht werden kann, und das mobile Speichermedium eine neue Liste, die die Zuordnung zwischen einer Telefonnummer und einer Adresse der Kommunikationsvorrichtung beschreibt, enthält.

5. Verkaufsautomat nach Anspruch 1, wobei die Steuervorrichtung (11) die Liste, die die Zuordnung zwischen einer Telefonnummer und einer Adresse der Kommunikationsvorrichtung beschreibt, vom Hostrechner (20) empfängt und die Liste in der Speichervorrichtung (12) abspeichert.

6. Verkaufsautomat nach Anspruch 1, wobei:
die Speichervorrichtung (12) eine Konfigurationsdatei abspeichert, die Elemente enthält, die die zugewiesene Adresse beinhalten; und dass
die Steuervorrichtung (11) die empfangene Adresse als das zugewiesene Adresselement der Konfigurationsdatei einstellt und unter Verwendung der Konfigurationsdatei die Wählverbindung aufbaut.

## Revendications

1. Distributeur automatique pouvant communiquer avec un ordinateur hôte (20) par une liaison commutée vers un point d'accès déterminé, comprenant:
un dispositif de communication (13) destiné à établir une liaison commutée, le dispositif de communication se voyant attribuer un numéro de téléphone déterminé;
un dispositif de mémorisation (12), et
un dispositif de commande (11) destiné à configurer la liaison commutée,
**caractérisé en ce que** le dispositif de mémorisation (12) mémorise une liste décrivant une correspondance entre un numéro de téléphone et une adresse du dispositif de communication (13); et
le dispositif de commande (11) émet vers le dispositif de communication (13) une recherche relative au numéro de téléphone attribué au dispositif de communication (13), retrouve à partir de la liste une adresse correspondant au numéro de téléphone reçu depuis le dispositif de communication (13), et configure la liaison commutée en utilisant l'adresse retrouvée comme adresse attribuée.

2. Distributeur automatique selon la revendication 1, dans lequel une commande AT est utilisée pour l'obtention du numéro de téléphone depuis le dispositif de communication (13).

3. Distributeur automatique selon la revendication 1, dans lequel le dispositif de commande (11) configure la liaison commutée en générant un fichier de configuration, et établit la liaison commutée en utilisant le fichier de configuration.

4. Distributeur automatique selon la revendication 1, comprenant en outre une interface à laquelle peut être connecté un support d'enregistrement mobile amovible, le support d'enregistrement mobile contenant une nouvelle liste décrivant la correspondance entre un numéro de téléphone et une adresse du dispositif de communication.

5. Distributeur automatique selon la revendication 1, dans lequel le dispositif de commande (11) reçoit la liste décrivant la correspondance entre un numéro de téléphone et une adresse du dispositif de communication depuis l'ordinateur hôte (20), et mémorise la liste dans le dispositif de mémorisation (12).

6. Distributeur automatique selon la revendication 1, dans lequel:
le dispositif de mémorisation (12) mémorise un fichier de configuration contenant des éléments comprenant les adresses attribuées; et
le dispositif de commande (11) règle l'adresse retrouvée comme l'élément d'adresse attribuée du fichier de configuration, et établit une liaison commutée en utilisant le fichier de configuration.
